(19) Europäisches Patentamt
European Patent Office
Office européen des brevets

(11) **EP 1 847 359 A2**

(12) # EUROPEAN PATENT APPLICATION

(43) Date of publication:
**24.10.2007 Bulletin 2007/43**

(51) Int Cl.:
***B25J 9/16*** (2006.01)

(21) Application number: **07007836.5**

(22) Date of filing: **17.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **18.04.2006 JP 2006114813**

(71) Applicant: **Fanuc Ltd
Minamitsuru-gun,
Yamanashi 401-0597 (JP)**

(72) Inventors:
• **Nagatsuka, Yoshiharu
Minamitsuru-gun
Yamanashi 401-0511 (JP)**
• **Oumi, Tatsuya
Minamitsuru-gun
Yamanashi 401-0511 (JP)**

(74) Representative: **Thum, Bernhard
Wuesthoff & Wuesthoff
Patent- und Rechtsanwälte
Schweigerstrasse 2
81541 München (DE)**

(54) **Robot simulation apparatus**

(57) A robot simulation apparatus which simulates a motion of a robot equipped with an end effector on a display screen, having: a position specifying portion, which, along with a three-dimensional model of the robot and three-dimensional models of a workpiece and a peripheral device displayed in prescribed positions relative to each other on the display screen, specifies a two-dimensional position on the screen to designate a prescribed position at a destination as a target to which the end effector, moving relative to the workpiece and the peripheral device, is to be moved; a position data acquiring portion, which converts data representing the two-dimensional position specified by the position specifying portion into data representing a three-dimensional position and thereby acquires the three-dimensional position of the destination; a shape data acquiring portion, which acquires shape data of the workpiece based on the three-dimensional position acquired by the position data acquiring portion; and a position/orientation computing portion, which based on the three-dimensional position and the shape data, computes the three-dimensional position and three-dimensional orientation of the robot.

EP 1 847 359 A2

## Description

Background of the Invention

1. Field of the Invention

The present invention relates to a robot simulation apparatus, which simulates the motion of a robot in an animated manner.

2. Related Art

In the prior art, it is known to provide a robot simulation apparatus for simulating the motion of a robot off-line, a typical example being one disclosed in International Publication WO 98/03314 (Japanese Patent No. 3841439). In the disclosed robot simulation apparatus, a robot, a workpiece, etc., are graphically displayed in the form of three-dimensional models on the screen of a display, and the end effector of the robot, which moves relative to the workpiece, etc., is moved, especially by jogging, to the designated destination specified as a two-dimensional position.

Another prior art example, though not directly related to the present invention, Japanese Unexamined Patent Publication No. H07-295625 discloses an apparatus, which displays a graphic image of a robot, along with the description of the jog mode and the direction of the jogging on the screen of a display during the jogging of the robot so that the jogging operation can be readily performed.

In the robot simulation apparatus disclosed in International Publication WO 98/03314, if a three-dimensional position is acquired (identified) from the two-dimensional position entered as the position of the destination of the end effector, since neither the three-dimensional position nor the three-dimensional orientation of the robot at that position is acquired, it has been difficult to move the robot and the end effector precisely to the specified position. The three-dimensional orientation of the robot becomes an important factor when fine-adjusting the robot and the end effector relative to the workpiece and peripheral device. If the robot and the end effector cannot be moved precisely to the specified position, off-line simulation may be substantially different from the actual operation of the robot at the actual worksite, leading to a problem in that the results obtained by the off-line simulation cannot be utilized effectively, and the burden of an operator at the worksite cannot be alleviated.

As a specific example, when performing a task such as deburring, arc welding or spot welding on a workpiece having a complex shape, it is common practice to set the angle of the end effector of the robot, for example, the angle of attack and the angle of advance as welding conditions, based on surface information or line information corresponding to the positions to be worked on the workpiece. In such cases, if off-line simulation is performed by specifying only the three-dimensional position, but not taking into consideration the three-dimensional orientation of the robot, the simulation results may not be able to be utilized effectively when adjusting the robot at the actual worksite.

Summary of the Invention

In view of the above situation, it is an object of the present invention to provide a robot simulation apparatus that can cope with various kinds of processing performed using a robot, and can thus achieve a highly versatile and precise simulation.

To achieve the above object, according to one mode of the present invention, there is provided a robot simulation apparatus, which simulates a motion of a robot equipped with an end effector on a display screen, comprising: a position specifying portion, which, along with a three-dimensional model of the robot and three-dimensional models of a workpiece and a peripheral device displayed in prescribed positions relative to each other on the display screen, specifies a two-dimensional position on the display screen to designate a destination as a target to which the end effector, moving relative to the workpiece and the peripheral device, is to be moved; a position data acquiring portion, which converts data representing the two-dimensional position specified by the position specifying portion into data representing a three-dimensional position and thereby acquires the three-dimensional position of the destination; a shape data acquiring portion, which acquires shape data of the workpiece based on the three-dimensional position acquired by the position data acquiring portion; and a position/orientation computing portion, which based on the three-dimensional position and the shape data, computes the three-dimensional position and three-dimensional orientation of the robot.

According to the present invention, the shape data acquiring portion acquires three-dimensional shape data of the workpiece based on the three-dimensional position, and based on the three-dimensional position and shape data, the position/orientation computing portion computes the three-dimensional position and three-dimensional orientation of the robot; as a result, not only is the robot (end effector) simply moved to the destination (target) as in the prior art, but the robot that has moved to the designated destination can be made to take a position and orientation that matches the shape data of the workpiece. Accordingly, the apparatus of the invention can cope with various kinds of processing performed using a robot and can thus achieve a highly versatile and highly precise simulation. Furthermore, the time required to study the application of the robot system in the actual working environment can be shortened, which contributes to further proliferation of the robot system.

In another mode of the robot simulation apparatus, the shape data acquiring portion can implement a function to search the shape data at a position closest to the three-dimensional position acquired by the position data acquiring portion, with utilizing a shape database for the workpiece.

According to this invention, by acquiring the shape data closest to the specified three-dimensional position of the workpiece from the shape database, the accuracy of the three-dimensional orientation can be enhanced.

In another mode of the robot simulation apparatus, the shape data can be acquired as line information or surface information of the workpiece, and the line information can be acquired as one that defines a straight line, arc or free-form curve.

According to this invention, since the three-dimensional shape data is acquired as the line information or surface information of the workpiece, the number of possible selections increases, making it possible to increase the application range of the shape data, and thus versatility of the robot simulation apparatus can be enhanced. Furthermore, since the line information defining a series of work points is acquired as one that defines a straight line, arc, or free-form curve, a robot simulation can be performed, such as deburring that requires working on the edges of a workpiece having a complex shape.

In another mode of the robot simulation apparatus, the apparatus can be equipped with a first recalculation portion, which recalculates the three-dimensional position and three-dimensional orientation of the robot if it is determined through simulation that the robot moves outside of a predetermined operating range.

According to this invention, with the provision of the first recalculation portion for recalculating the three-dimensional position and three-dimensional orientation of the robot, the robot can be prevented from going beyond a limit set in a direction along a coordinate axis or about the coordinate axis when the robot is moved, and thus the burden imposed on the actual robot can be alleviated.

In another mode of the robot simulation apparatus, the apparatus can be equipped with a second recalculation portion, which recalculates the three-dimensional position and three-dimensional orientation of the robot if it is determined through simulation that the robot interferes with the workpiece and/or the peripheral device.

According to this invention, with the provision of the second recalculation portion, which recalculates the three-dimensional position and three-dimensional orientation of the robot if it is determined that the robot interferes with the workpiece and/or the peripheral device, the robot can be prevented from interfering with the workpiece and/or the peripheral device, and thus the burden imposed on the actual robot can be alleviated.

Brief Description of the Drawings

The above and other objects, features, and advantages of the present invention will become more apparent from the description of the preferred embodiments as set forth below with reference to the accompanying drawings, wherein:

Figure 1 is a diagram showing the configuration of a robot simulation apparatus according to one embodiment of the present invention;
Figure 2 is perspective view showing a robot and a workpiece displayed on the screen of a display;
Figure 3 is a flowchart showing a simulation flow of the robot simulation apparatus shown in Figure 1;
Figure 4A is an explanatory diagram for step S1 of the flowchart;
Figure 4B is an explanatory diagram for step S2 of the flowchart;
Figure 4C is an explanatory diagram for step S3 of the flowchart;

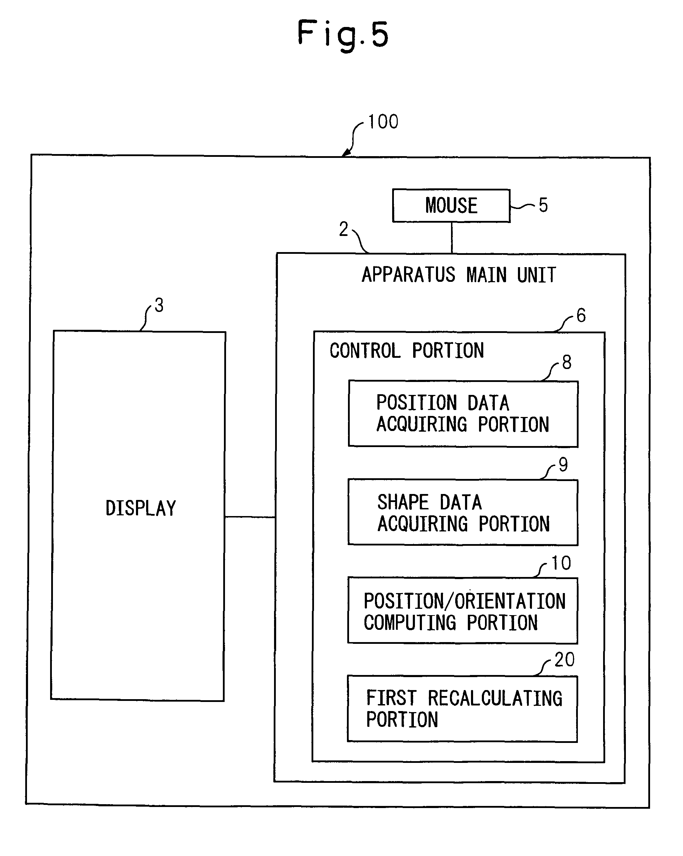

Figure 5 is a flowchart illustrating a modified example of the embodiment;
Figure 6 is a flowchart showing a simulation flow of the robot simulation apparatus shown in Figure 5;
Figure 7 is a flowchart illustrating another modified example of the embodiment; and
Figure 8 is a flowchart showing a simulation flow of the robot simulation apparatus shown in Figure 7.

Detailed Description

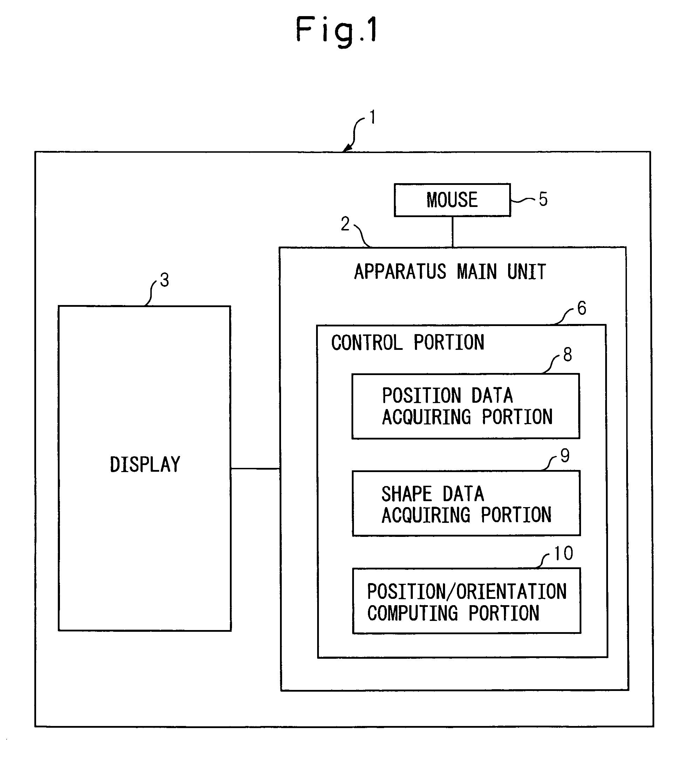

A robot simulation apparatus (hereinafter called the "simulation apparatus") according to the present invention will be described below with reference to the drawings. Throughout the drawings, the same portions are designated by the same reference numerals, and the description of such portions, once given, will not be repeated hereafter. The simulation apparatus 1 of the embodiment shown in Figure 1 is configured to be able to conduct an off-line simulation of robot motion corresponding to a jogging motion of a robot 12 to be performed by manual operation on the actual robot, and comprises: an apparatus main unit 2 having control functions; a display 3, connected to the apparatus main unit 2, for displaying graphic images; a keyboard (not shown) as an operation device for operating the apparatus main unit 2; and a mouse (position specifying portion) 5 as a pointing device for specifying a specific position on the screen of the display 3.

The apparatus main unit 2 comprises a control section 6 and interfaces not shown. The control section 6 includes a board as a circuit member, a CPU, and various kinds of memories such as ROM, RAM, nonvolatile memory, etc. A system program for controlling the overall operation of the simulation apparatus 1 is stored in the ROM. RAM is memory used as temporary storage of data for processing by the CPU. The nonvolatile memory stores not only operation program data and various set values for the robot 12, but also programs and various data necessary for the implementation of the method to be described later.

The control section 6 is electrically connected to the display 3, keyboard, mouse 5, and other devices, such as a robot control device and CAD device not shown, via respective interfaces, and electrical signals are transferred between them. Each input signal is processed in the control section 6 to implement the corresponding function.

In one mode, the control section 6 implements the functions shown here. That is, the control section 6 comprises: a position data acquiring portion 8, which implements the function of converting data representing a two-dimensional position, specified on the screen of the display 3 using the mouse 5 as the position specifying portion, into data representing a three-dimensional position, and thereby acquiring the three-dimensional position of the destination of the end effector 13 of the robot 12; a shape data acquiring portion 9, which implements the function of acquiring shape data of a workpiece 14 at a position corresponding to the acquired three-dimensional position; and a position/orientation computing portion 10, which implements the function of computing the three-dimensional position and three-dimensional orientation of the robot 12 based on the acquired three-dimensional position and shape data.

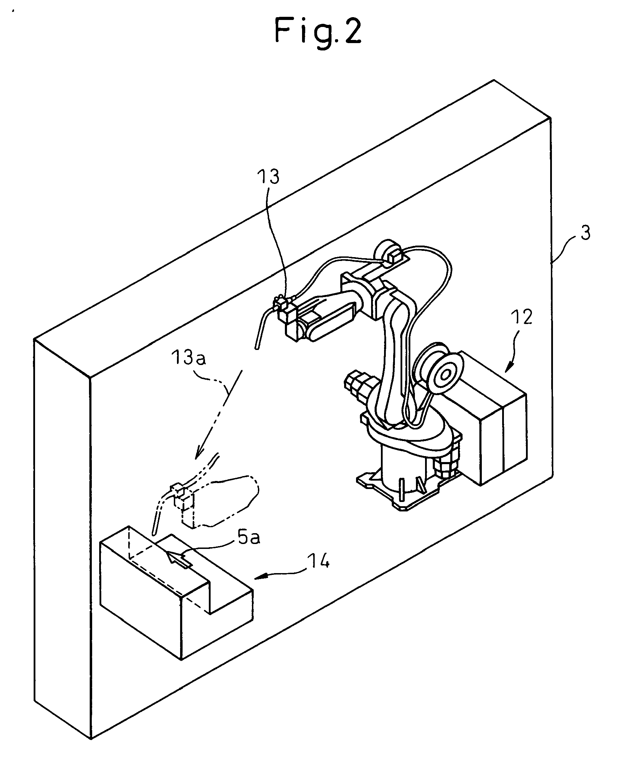

In Figure 2, the destination of the end effector 13 of the welding robot 12 is indicated by an arrow 13a on the screen of the display 3. The arrow 13a points to an edge portion of the workpiece 14 as a portion to be worked on. The robot 12 moves so as to bring the tip (TCP) of the end effector 13 to the specified position, and the robot 12 takes a prescribed orientation; in this condition, the welding task is performed in an animated manner.

The display 3 is constructed from a liquid crystal display or a CRT, etc., and a three-dimensional model of the robot 12 equipped with the end effector 13 and three-dimensional models of the workpiece 14 and peripheral devices not shown are graphically displayed on the screen of the display 3. In Figure 2, the robot 12 and the workpiece 14 are arranged in prescribed positions relative to each other. Three-dimensional model data for the robot 12 and the workpiece 14 are loaded, for example, directly from a CAD device (not shown), or indirectly from a recording medium. The positional relationship between the robot 12 and the workpiece 14 at the actual worksite is reproduced on the screen. Any suitable graphic display method can be employed here, for example, solid models, frame models, or wire models may be used to display the models.

One method for specifying the two-dimensional position on the screen of the display 3, the mouse 5 may be moved around on the screen to specify the position by using an arrow 5a or a cross cursor, as in the present embodiment.

In another mode of the display, a touch panel, which is a component integrally constructed with an LCD (Liquid Crystal Display) or the like may be employed. Since the touch panel is constructed to detect the X-Y coordinates of the position touched with a finger or a pen, the need for a mouse 5 used as a pointing device in the present embodiment can be eliminated.

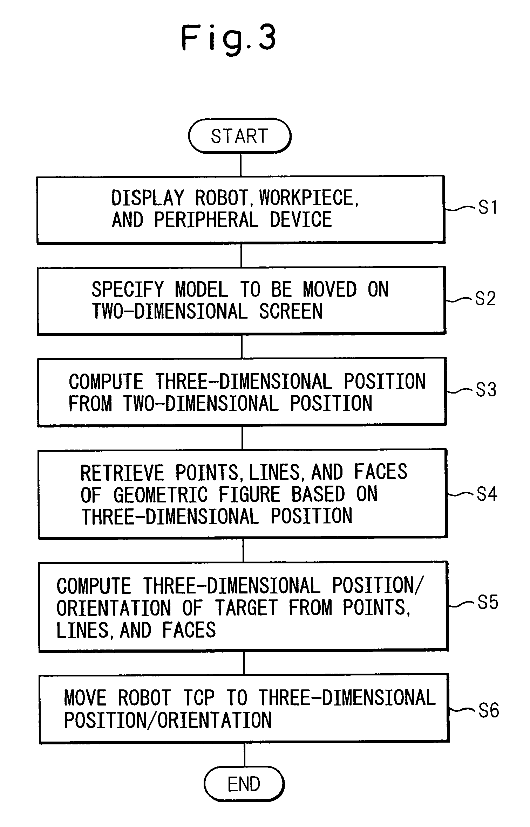

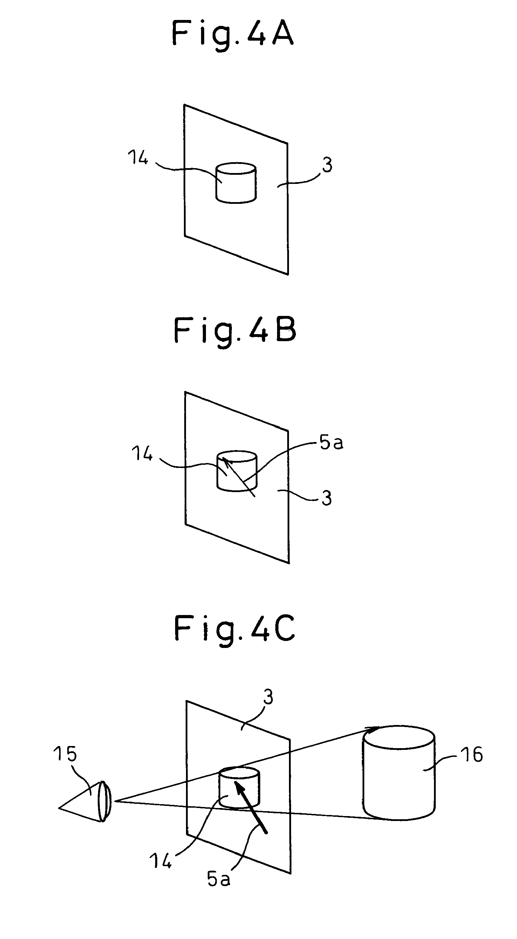

Next, the simulation apparatus of the present embodiment will be described with reference to the flowchart of Figure 3 and the explanatory diagram of Figures 4A-4C.

In step S1, three-dimensional wire models of the robot (not shown), workpiece 14, and peripheral devices (not shown) are graphically displayed, as shown in Figure 4A, on the screen of the display 3 so as to reflect their relative positions in the actual working environment.

In step S2, the two-dimensional position that coincides with the tip of the end effector is specified on the screen of the display 3 by operating the mouse so as to point the arrow 5a to that position, as shown in Figure 4B.

In step S3, from the two-dimensional position specified on the screen, the three-dimensional position is computed by the position data acquiring portion 8, as shown in Figure 4C. More specifically, the three-dimensional model 16 of the workpiece 14 as viewed from the viewpoint 15 is projected onto a two-dimensional screen for display in graphical form (in other words, the three-dimensional model of the workpiece is converted back into a two-dimensional model). Then, the position data computing portion converts two dimensions to three dimensions, searches a database of three-dimensional shape data based on the position on the screen and the line-of-sight vector, and determines the three-dimensional position on the three-dimensional model 16.

In step S4, the three-dimensional shape database used in step S3 is searched to retrieve face, edge, vertex and position data, etc. of the workpiece 14, thereby acquiring the shape data at the position closest to the determined three-dimensional position (shape data acquiring portion.

In step S5, the three-dimensional position and orientation of the robot 12 are computed from the shape data acquired in step S4. More specifically, when the position/orientation to be obtained in a three-dimensional space is denoted by P, P is expressed as P = (n, o, a, p), where n is the normal vector (vector in x direction), o is the orient vector (vector in y direction), a is the approach vector (vector in z direction), and p is the position vector.

Since the position vector p is already computed in step S3, the other orientation determining elements n, o, and a should be obtained in order to determine P. For example, when the shape data of the workpiece 14 represents a plane face, a is obtained as a normal vector $(a_1, b_1, c_1)$ from a plane equation $a_1x + b_1y + c_1z + d_1 = 0$.

The normal vector n is obtained as shown below from the approach vector a and the current position/orientation $(n_1, o_1, a_1)$ of the tool end point of the robot 12. Here, $o_1 \times a$ is the outer product, and $|o_1 \times a|$ is the absolute value of the outer product.

## [MATHEMATICAL 1]

$$n = \frac{o1 \times a}{|o1 \times a|}$$

The orient vector o is obtained as o = n x a, i.e., the outer product of the normal vector n and the approach vector perpendicular to each other.

Alternatively, the current position/orientation of the tool end point of the robot 12 may not be used, but from the obtained line data (line information), the direction of the line may be taken as n, and the remaining a may be obtained. When the line is an arc or a free-form curve, a can be obtained by taking the tangent from the obtained position as n.

In step S6, the robot 12 is moved to the computed three-dimensional position/orientation in an animated manner, and robot motion corresponding to a jogging motion of the robot 12 is performed by off-line simulation.

Next, a modified example of the simulation apparatus according to the present embodiment will be described. In this modified example, the control section 6 of the apparatus main unit 2 further comprises a first recalculation portion 20, which recalculates the three-dimensional orientation of the robot 12 when it is determined that the robot 12 moves outside of a predetermined operating range.

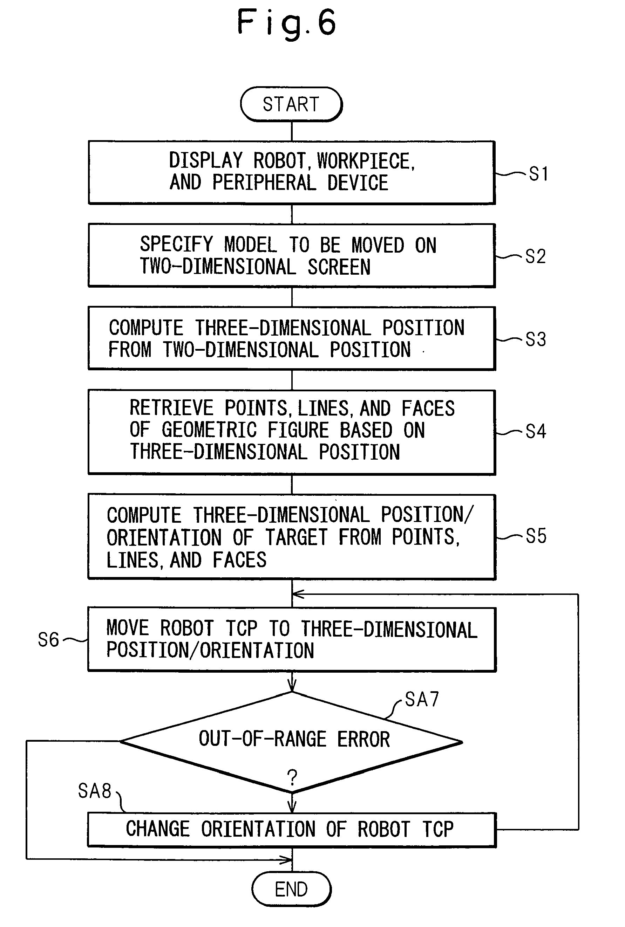

As shown in the flowchart of Figure 6, if it is determined in step SA7, which follows the simulation executing step S6, that the robot 12 moves outside of the predetermined operating range, then in step SA8 a new three-dimensional orientation is obtained by recalculating and thus changing the three-dimensional orientation of the robot 12.

A specific example of the recalculation method will be described with reference to a six-axis articulated robot equipped with a servo gun (not shown). The servo gun is rotated about the approach axis (z axis) of the TCP (Tool Center Point), and the robot is moved again. The position/orientation P to be obtained in the three-dimensional space is expressed as P = (n, o, a, p), as described earlier. To change the position/orientation P, the rotational angle θ of the servo gun is successively changed from 0 to 360 degrees in increments of an arbitrary number of degrees, for example, 10 degrees, and the position/orientation P at each angle is obtained.

Here, when the rotation matrix is Pθ, the normal vector is n = (cosθ, -sinθ, 0, 0), the orient vector o = (sinθ, cosθ, 0, 0), the approach vector is a = (0, 0, 1, 0), and the constant is 1 = (0, 0, 0, 1), then the new position/orientation P in the three-dimensional space is obtained as P = Pθ·P.

If the position is outside the operating range for all regions of the rotational angle θ from 0 to 360 degrees, it is determined that no solutions are found in any region, and the process is terminated by producing an error. If a solution is found, the robot is moved accordingly, after which the process is terminated. Steps S1 to S6 in this modified example are the same as those described earlier, and the same will not be repeated here.

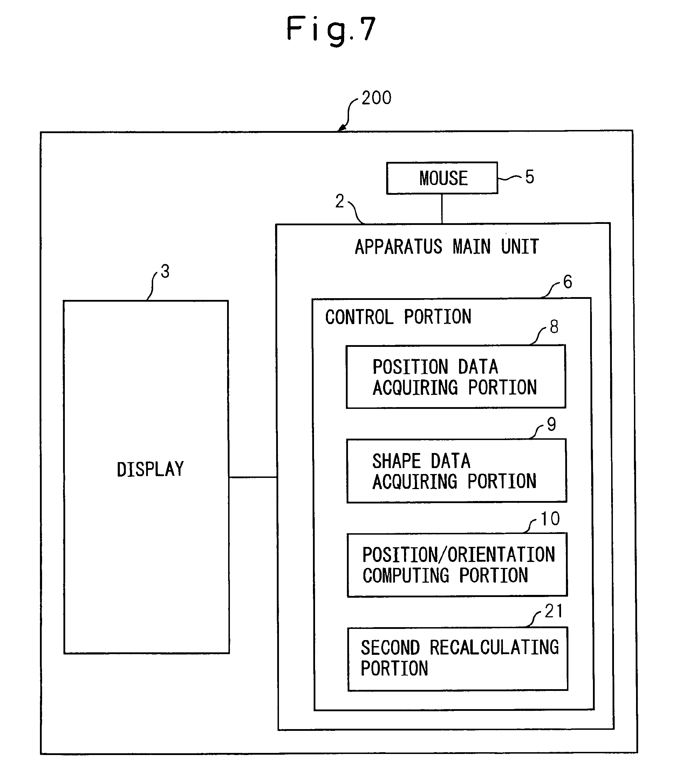

Next, another modified example of the simulation apparatus according to the present embodiment will be described. In this modified example, as shown in Figure 7, the control section 6 of the apparatus main unit 2 further comprises a second recalculating portion 21, which recalculates the three-dimensional orientation of the robot 12 when it is determined that the robot 12 interferes with the workpiece 14 and/or a peripheral device.

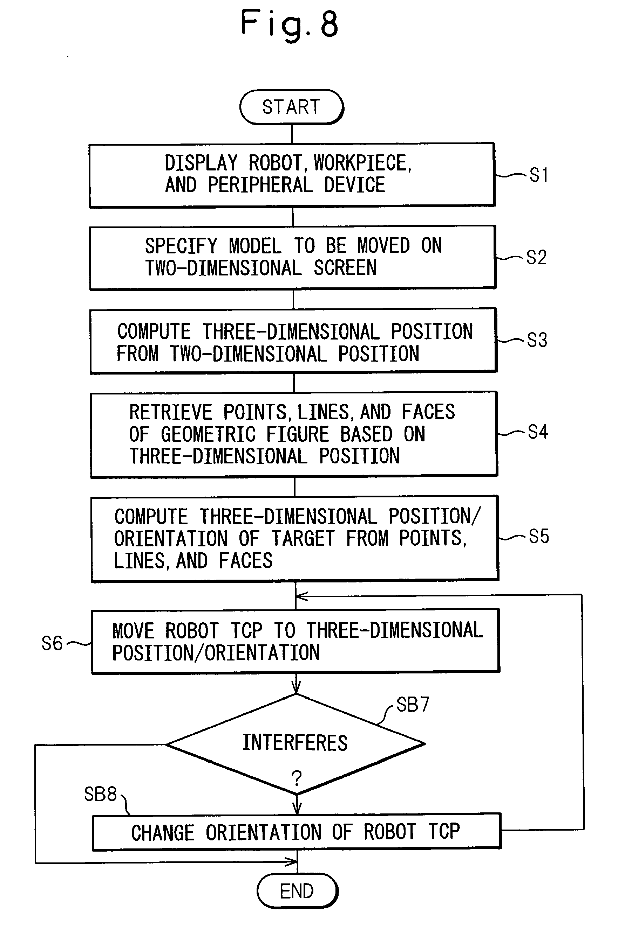

As shown in the flowchart of Figure 8, if it is determined in step SB7, which follows the simulation executing step S6, that the robot 12 interferes with the workpiece 14 and/or a peripheral device, then in step SB8 a new three-dimensional orientation is obtained by performing a recalculation and thereby changing the three-dimensional orientation of the robot 12.

In a specific example, as in the foregoing modified example, the rotational angle θ of the servo gun is successively changed from 0 to 360 degrees in increments of an arbitrary number of degrees, and the position/orientation P at each angle is obtained; if the position is outside the operating range for all regions, it is determined that no solutions are found in any region, and the process is terminated by producing an error. If a solution is found, the orientation is obtained using the center value of the angle range, and the robot is moved accordingly, after which the process is terminated. Steps S1 to S6 in this modified example are the same as those described earlier, and the same description will not be repeated here.

As described above, according to the above embodiment and other modes of the embodiment, by making use of shape data such as faces, lines, and vertices of the three-dimensional model of the workpiece 14, the robot 12 can be moved quickly and easily to the intended position/orientation with a high degree of precision in accordance with the application of the robot such as deburring, arc welding, spot welding, etc., and the time required to study the application of the robot system can be shortened. Furthermore, even people other than those skilled can perform robot jog motions appropriately and can study the application.

The present invention is not limited to the above embodiment, but can be modified in various ways without departing from the spirit and scope of the present invention. For example, in the modified example of the present embodiment, the control section 6 of the apparatus main unit 2 can be equipped with both the first and second recalculation portions 20, 21.

## Claims

1. A robot simulation apparatus, which simulates a motion of a robot (12) equipped with an end effector (13) on a display screen,
**characterized in that** the robot simulation apparatus (1, 100, 200) comprises:

a position specifying portion, which, along with a three-dimensional model of said robot (12) and three-dimensional models of a workpiece (14) and a peripheral device displayed in prescribed positions relative to each other on said display screen (3), specifies a two-dimensional position on said display screen to designate a destination as a target to which said end effector (13), moving relative to said workpiece and said peripheral device, is to be moved;

a position data acquiring portion (8), which converts data representing said two-dimensional position specified by said position specifying portion into data representing a three-dimensional position and thereby acquires the three-dimensional position of said destination;

a shape data acquiring portion (9), which acquires shape data of said workpiece (14) based on said three-dimensional position acquired by said position data acquiring portion (8); and

a position/orientation computing portion, which based on said three-dimensional position and said shape data, computes the three-dimensional position and three-dimensional orientation of said robot (12).

2. A robot simulation apparatus (1, 100, 200) as claimed in claim 1,
**characterized in that** said shape data acquiring portion (9) implements a function to search shape data at a position closest to said three-dimensional position acquired by said position data acquiring portion (8), with utilizing a shape database for said workpiece (14).

3. A robot simulation apparatus (1, 100, 200) as claimed in claim 1,
**characterized in that** said shape data is line information or surface information of said workpiece (14).

4. A robot simulation apparatus (1, 100, 200) as claimed in claim 3,
**characterized in that** said line information defines a straight line, arc or free-form curve.

5. A robot simulation apparatus (100) as claimed in claim 1,
**characterized in that** the robot simulation apparatus (1, 100, 200) further comprises a first recalculation portion (20), which recalculates the three-dimensional position and three-dimensional orientation of said robot (12) if it is determined through simulation that said robot (12) moves outside of a predetermined operating range.

6. A robot simulation apparatus (200) as claimed in claim 1,
**characterized in that** the robot simulation apparatus (1, 100, 200) further comprises a second recalculation portion, which recalculates the three-dimensional position and three-dimensional orientation of said robot (12) if it is determined through simulation that said robot (12) interferes with said workpiece (14) and/or said peripheral device.

# Fig.1

# Fig.2

# Fig.3

```
                    ┌─────────────┐
                    │    START    │
                    └─────────────┘
                           │
    ┌──────────────────────────────────────────┐
    │  DISPLAY ROBOT, WORKPIECE,                │──S1
    │  AND PERIPHERAL DEVICE                    │
    └──────────────────────────────────────────┘
                           │
    ┌──────────────────────────────────────────┐
    │  SPECIFY MODEL TO BE MOVED ON             │──S2
    │  TWO-DIMENSIONAL SCREEN                    │
    └──────────────────────────────────────────┘
                           │
    ┌──────────────────────────────────────────┐
    │  COMPUTE THREE-DIMENSIONAL POSITION       │──S3
    │  FROM TWO-DIMENSIONAL POSITION            │
    └──────────────────────────────────────────┘
                           │
    ┌──────────────────────────────────────────┐
    │  RETRIEVE POINTS, LINES, AND FACES        │
    │  OF GEOMETRIC FIGURE BASED ON             │──S4
    │  THREE-DIMENSIONAL POSITION               │
    └──────────────────────────────────────────┘
                           │
    ┌──────────────────────────────────────────┐
    │  COMPUTE THREE-DIMENSIONAL POSITION/      │
    │  ORIENTATION OF TARGET FROM POINTS,       │──S5
    │  LINES, AND FACES                         │
    └──────────────────────────────────────────┘
                           │
    ┌──────────────────────────────────────────┐
    │  MOVE ROBOT TCP TO THREE-DIMENSIONAL      │──S6
    │  POSITION/ORIENTATION                     │
    └──────────────────────────────────────────┘
                           │
                    ┌─────────────┐
                    │     END     │
                    └─────────────┘
```

# Fig. 4A

# Fig. 4B

# Fig. 4C

EP 1 847 359 A2

Fig.5

100

MOUSE ⌐5

2⌐

APPARATUS MAIN UNIT

3⌐

DISPLAY

CONTROL PORTION ⌐6

POSITION DATA
ACQUIRING PORTION ⌐8

SHAPE DATA
ACQUIRING PORTION ⌐9

POSITION/ORIENTATION
COMPUTING PORTION ⌐10

FIRST RECALCULATING
PORTION ⌐20

11

# Fig.6

```
                    ┌──────────┐
                    │  START   │
                    └────┬─────┘
                         │
        ┌────────────────┴────────────────┐
        │ DISPLAY ROBOT, WORKPIECE,        │──── S1
        │ AND PERIPHERAL DEVICE            │
        └────────────────┬────────────────┘
                         │
        ┌────────────────┴────────────────┐
        │ SPECIFY MODEL TO BE MOVED ON     │──── S2
        │ TWO-DIMENSIONAL SCREEN           │
        └────────────────┬────────────────┘
                         │
        ┌────────────────┴────────────────┐
        │ COMPUTE THREE-DIMENSIONAL        │──── S3
        │ POSITION FROM TWO-DIMENSIONAL    │
        │ POSITION                         │
        └────────────────┬────────────────┘
                         │
        ┌────────────────┴────────────────┐
        │ RETRIEVE POINTS, LINES, AND      │──── S4
        │ FACES OF GEOMETRIC FIGURE        │
        │ BASED ON THREE-DIMENSIONAL       │
        │ POSITION                         │
        └────────────────┬────────────────┘
                         │
        ┌────────────────┴────────────────┐
        │ COMPUTE THREE-DIMENSIONAL        │──── S5
        │ POSITION/ORIENTATION OF TARGET   │
        │ FROM POINTS, LINES, AND FACES    │
        └────────────────┬────────────────┘
                         │
S6 ─────┌────────────────┴────────────────┐
        │ MOVE ROBOT TCP TO                │
        │ THREE-DIMENSIONAL                │
        │ POSITION/ORIENTATION             │
        └────────────────┬────────────────┘
                         │
                    ◇ OUT-OF-RANGE ERROR ? ◇──── SA7
                         │
        SA8 ─┌───────────┴──────────────┐
             │ CHANGE ORIENTATION OF     │
             │ ROBOT TCP                 │
             └───────────────────────────┘
                         │
                    ┌────┴─────┐
                    │   END    │
                    └──────────┘
```

# Fig.7

200

APPARATUS MAIN UNIT — 2

MOUSE — 5

DISPLAY — 3

CONTROL PORTION — 6

POSITION DATA ACQUIRING PORTION — 8

SHAPE DATA ACQUIRING PORTION — 9

POSITION/ORIENTATION COMPUTING PORTION — 10

SECOND RECALCULATING PORTION — 21

EP 1 847 359 A2

# Fig.8

```
        START

DISPLAY ROBOT, WORKPIECE,          S1
AND PERIPHERAL DEVICE

SPECIFY MODEL TO BE MOVED ON       S2
TWO-DIMENSIONAL SCREEN

COMPUTE THREE-DIMENSIONAL POSITION S3
FROM TWO-DIMENSIONAL POSITION

RETRIEVE POINTS, LINES, AND FACES
OF GEOMETRIC FIGURE BASED ON       S4
THREE-DIMENSIONAL POSITION

COMPUTE THREE-DIMENSIONAL POSITION/
ORIENTATION OF TARGET FROM POINTS, S5
LINES, AND FACES

MOVE ROBOT TCP TO THREE-DIMENSIONAL
S6   POSITION/ORIENTATION

        INTERFERES        SB7
           ?

SB8  CHANGE ORIENTATION OF ROBOT TCP

        END
```

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9803314 A
- JP 3841439 B
- JP H07295625 A